**Europäisches Patentamt**

(19) **European Patent Office**

**Office européen des brevets**

(11) Veröffentlichungsnummer : **0 004 939**
**B2**

(12) # NEUE EUROPÄISCHE PATENTSCHRIFT

(45) Veröffentlichungstag der neuen Patentschrift :
01.10.86

(51) Int. Cl.⁴ : **C 08 G 18/65, C 08 G 18/10**

(21) Anmeldenummer : **79101111.7**

(22) Anmeldetag : **11.04.79**

(54) **Verwendung von thermoplastischen Polyurethanen zur Verarbeitung in Extrudern und/oder auf Kalandern.**

(30) Priorität : **21.04.78 DE 2817457**

(43) Veröffentlichungstag der Anmeldung :
**31.10.79 Patentblatt 79/22**

(45) Bekanntmachung des Hinweises auf die Patenterteilung : **09.03.83 Patentblatt 83/10**

(45) Bekanntmachung des Hinweises auf die Entscheidung über den Einspruch : **01.10.86 Patentblatt 86/40**

(84) Benannte Vertragsstaaten :
**BE CH DE FR IT NL**

(56) Entgegenhaltungen :
**DE-A- 2 161 340**
**DE-A- 2 432 090**
**FR-A- 2 283 917**
**Houben-Weyl, Band XIV/2 (1963), Georg Thieme Verlag, Stuttgart, S. 71,72**
**Kolloid-Zeitschrift u. Zeitschrift für Polymere Bd. 250, Heft 8, S. 797-811, (1972)**
**Polyurethane Kunststoff-Handbuch, Band 7, 1983, Hanser-Verlag, S. 35,36**
**Katuschuk + GummiKunststoffe, 35. Jahrgang, Nr. 7, S. 568-584 (1982)**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Quiring, Bernd, Dr.**
**Albrecht-Haushofer-Strasse 2**
**D-5090 Leverkusen (DE)**
Erfinder : **Niederdellmann, Georg, Dr.**
**Helnestrasse 6**
**D-4047 Dormagen (DE)**
Erfinder : **Goyert, Wilhelm, Dr.**
**Wolfskaul 10**
**D-5000 Köln 80 (DE)**
Erfinder : **Wagner, Hans, Dr.**
**Tizianstrasse 13**
**D-4047 Dormagen (DE)**

**EP 0 004 939 B2**

0 004 939

**Beschreibung**

Die thermoplastisch zu verarbeitenden Polyurethane des Standes der Technik sind in der Regel aufgebaut aus einem oder gegebenenfalls mehreren höhermolekularen Diolen, einem Diisocyanat und einem Glykol, meist Butandiol, als Kettenverlängerer. Diese Produkte lassen sich im Spritzgußverfahren sehr gut verarbeiten. Bei der Verarbeitung in Extrudern und/oder auf Schmelzwalzenkalandern werden jedoch nur selten, d. h. nur wenn von Fall zu Fall zu ermittelnde optimale Bedingungen ganz genau eingehalten werden, homogene, von unaufgeschlossenen Teilchen freie Schmelzen erhalten. Schon geringfügige Dosierschwankungen bei der Herstellung des thermoplastischen Polyurethans sowie kleine Veränderungen der Extruder- bzw. Walzentemperatur bei der Verarbeitung können zu einer stark mit Quellkörpern durchsetzten Schmelze führen, die auch nach dem Abkühlen Produkte mit rauher Oberfläche ergibt. Vor allem in Folien wirken sich diese unaufgeschlossenen Teilchen nachteilig aus. Sie haben nicht nur einen anderen Brechungsindex, sondern führen auch beim Dehnen zu Spannungen und mitunter zu vorzeitigen Rissen.

In der FR-PS 2 283 917 werden Polyätherpolyurethan-Elastomere beschrieben, welche kurzfristig hohe Temperaturbelastungen im Extrusions- bzw. Injektionsverfahren ohne wesentliche Thermo-Schädigung bis zu Temperaturen bis 232 °C überstehen, wenn als Polyäther bestimmte, alkaliarme Sequenz-Polyäther mit Polypropylenoxid- und Polyäthylenoxid-Einheiten eingesetzt werden. Als Kettenverlängerungsmittel werden Diole oder Diolgemische verwendent. Die Thermostabilitätsverbesserung beruht dabei auf den ausgewählten Sequenzpolyäthern, gleichgültig, ob ein Diol oder ein Diolgemisch verwendet wird.

Es wurden nunmehr thermoplastische Polyurethane gefunden, die im homogenen Zustand praktisch die gleichen guten Eigenschaften wie die Produkte des Standes der Technik haben, sich aber wesentlich leichter durch Extrusion und/oder Kalandrierung zu homogenen Schmelzen und daraus zu erstarrten Produkten mit glatter Oberfläche verarbeiten lassen. Kennzeichnend für diese Polyurethane ist, daß bei ihrer Herstellung ein Gemisch zweier niedermolekularer Diole als Kettenverlängerungsmittel verwendet wurde. Der Begriff « thermoplastisches Polyurethan » wird im folgenden « TPU » abgekürzt.

In der US-PS 3 214 411 wird zwar (in Beispiel 21) ein TPU beschrieben, welches unter Verwendung eines Gemisches von ca. 70 % 1,4-Butandiol und ca. 30 % Diäthylenglykol als Kettenverlängerungsmittel hergestellt wurde ; ein derartiges TPU weist jedoch im Vergleich zu einem Produkt auf Basis von Butandiol als alleinigem Kettenverlängerungsmittel einen wesentlich niedrigeren Erweichungsbereich und beim Abkühlen aus der Schmelze ein deutlich ungünstigeres Erstarrungsverhalten auf. Es neigt außerdem zu ausgeprägtem Schrumpfen.

Gegenstand der Erfindung ist die Verwendung von thermoplastischen Polyurethanen auf Basis von Polyolen, Diisocyanaten und Kettenverlängerungsmittelgemischen zur Verarbeitung in Extrudern und/oder Schmelz-Walzenkalandern, dadurch gekennzeichnet, daß die verwendeten Polyurethane aufgebaut sind aus

A) einem oder mehreren, im wesentlichen linearen, zwei, anteilsweise gegebenenfalls auch 3 Hydroxylgruppen aufweisenden Polyestern aus Glykolen und Adipinsäure, Phthal- und/oder Terephthalsäure, sowie deren Hydrierungsprodukten, Polycarbonaten und Polycaprolactonen, mit Molekulargewichten von 400-10 000, bevorzugt 450-5 000.

B) Diphenylmethan diisocyanat, sowie ggfs. bis zu 30 Gew-% anderer Diisocyanate und

C) einer Mischung aus 85-99 Gew.-%, bevorzugt 90-98 Gew.-%, besonders bevorzugt 92-95 Gew.-% Butandiol-(1,4) und 1-15 Gew.-%, bevorzugt 2-10 Gew.-%, besonders bevorzugt 5-8 Gew.-% Hexandiol-(1,6), wobei das Äquivalentverhältnis von NCO-Gruppen der Komponente B) zu den zerewitinoffaktiven Wasserstoffatomen der Komponenten (A + C) = 0,9 : 1 bis 1,2 : 1, bevorzugt 0,93 : 1 bis 1,04 : 1 ist und das molare Verhältnis der Komponenten A) zu C) 1 : 20 bis 5 : 1, vorzugsweise 1 : 15 bis 1 : 1, beträgt.

Zur Herstellung der erfindungsgemäß zu verwendenden Polyurethane wird entweder reines oder technisches, im wesentlichen aus dem 4,4'-Isomeren bestehendes Diphenylmethandiisocyanat eingesetzt. Die Polyurethane können auch eins oder mehrere der aromatischen, heterocyclischen, aliphatischen, cycloaliphatischen oder araliphatischen Diisocyanate des Standes der Technik enthalten, wobei der Anteil an Diphenylmethandiisocyanat an der gesamten Diisocyanatmenge jedoch nicht unter 70 Gew.-% liegen soll.

Beispiele für derartige zusätzliche Polyisocyanate sind den oben im Zusammenhang mit der höhermolekularen Polyhydroxylverbindung genannten Druckschriften zu entnehmen.

Die Kettenverlängerermischung C) besteht zu 85-99, bevorzugt zu 90-98, besonders bevorzugt 92-95, Gewichtsprozent aus Butandiol-(1,4) und zu 1-15, bevorzugt zu 2-10, besonders bevorzugt 5-8, Gewichtsprozent aus Hexandiol-(1,6).

Gegebenenfalls können beim Aufbau der erfindungsgemäß zu verwendenden TPU auch monofunktionelle Kettenabbrecher (vor allem Monoalkohole wie z. B. n-Octanol oder sek.-Butanol) mit verwendet werden, insbesondere wenn trifunktionelle höhermolekulare Polyole eingesetzt werden sollen. Die Gesamtfunktionalität aller verwendeten Polyole soll etwa 2 betragen. Geeignete Kettenabbrecher sind ebenfalls in den eingangs erwähnten Druckschriften aufgeführt.

2

0 004 939

Die erfindungsgemäß zu verwendenden Polyurethane werden auf an sich bekannte Weise nach dem Präpolymer — oder one-shot-Verfahren hergestellt. Vorzugsweise baut man das Polyurethan in einer Reaktionsschnecke, insbesondere einer zweiwelligen, selbstreinigenden Schneckenmaschine auf, wobei die einzelnen Reaktionskomponenten bereits vorvermischt oder auch getrennt in die Einzugszone des Extruders gebracht oder auch an verschiedenen Stellen der Reaktionsschnecke eingespeist werden. Herstellverfahren dieser Art werden z. B. in den US-Patentschriften 3 233 025 und 3 642 964, in der DE-AS 2 610 980 und insbesondere in den DE-Offenlegungsschriften 2 302 564, 2 423 764 und 2 549 372 (US-Patent 3 963 679) beschrieben.

Die erfindungsgemäß zu verwendenden Polyurethane sind teilweise bereits bekannt : In der DE-AS 2 402 779 werden Polyurethane für Beschichtungszwecke beschrieben, die aus höhermolekularen Dihydroxyverbindungen, Diisocyanaten und einem Glykolgemisch als Kettenverlängerungsmittel aufgebaut sind.

Diese Polyurethane zeichnen sich durch besondere Löslichkeitseigenschaften aus, so daß bei ihrer Verwendung im Umkehrbeschichtungsverfahren der sogenannte « Eisblumeneffekt » vermieden werden kann. Ähnliche Polyurethane (welche in einem NCO/OH-Verhältnis < 1 hergestellt worden sind) können gemäß DE-AS 2 161 340 (Can. Patentschrift 972 496) mit Vorteil als Klebstoff eingesetzt werden. Ein Hinweis auf verbesserte thermoplastische Eigenschaften findet sich in diesen Publikationen nicht.

Es wurde nun jedoch überraschend gefunden, daß die erfindungsgemäß zu verwendenden Polyurethane sich auf Extrudern und Schmelz-Kalandern viel leichter verarbeiten lassen als solche, die z. B. mit Butandiol allein kettenverlängert sind. Der Spielraum bei der Wahl des NCO/OH-Verhältnisses bei der herstellung der TPU ist ebenso wie der bei der Wahl der Verarbeitungstemperaturen im Extruder und/oder auf dem Kalander viel größer. Im Gegensatz zu den handelsüblichen Produkten, die nur einen Kettenverlängerer enthalten, ist es möglich, zwei verschiedene Partien des gleichen Polyurethans unter den gleichen Bedingungen zu verarbeiten. Das zeit- und materialraubende Suchen der geeigneten Verarbeitungsbedingungen beim Wechsel der TPU-Partie entfällt damit. Außerdem können Verarbeitungsmaschinen mit größeren (Temperatur-) Toleranzen verwendet werden.

Die erfindungsgemäß zu verwendenden mischverlängerten Polyurethane unterscheiden sich, wenn bei ihrer Herstellung die oben angegebenen bevorzugten Mengenverhältnisse angewandt werden, in den übrigen Eigenschaften wie Festigkeiten, Elastizität, Dehnbarkeit, Kristallisationsverhalten, Erweichungspunkt usw. praktisch nicht von den Produkten, die nur mit Butandiol-(1,4) kettenverlängert sind, sonst aber gleiche Zusammensetzung haben. Mit der besseren Verarbeitbarkeit sind also keine Nachteile verbunden. Erst bei einem Cokettenverlängereranteil von mehr als 10 % sinkt der Erweichungspunkt und wird ein stärkeres Schrumpfen festgestellt.

Die erfindungsgemäß zu verwendenden Produkte können natürlich an sich bekannte Katalysatoren, Gleitmittel, Stabilisatoren, Füllstoffe, Farbstoffe, Pigmente, andere Thermoplasten, Weichmacher usw. enthalten.

In einer besonderen Ausführungsform des erfindungsgemäßen Verfahrens werden derartige Additive erst bei der Endverarbeitung in das TPU eingearbeitet.

Die erfindungsgemäß zu verwendenden thermoplastischen Polyurethane werden durch Extrusion und/oder Verarbeitung auf Kalandern zu Folien, Schläuchen, Kabelmänteln, Profilen usw. geformt, die eine gleichmäßige Oberfläche haben.

Für die erfindungsgemäße Verwendung der speziellen TPU eignen sich alle in der Praxis eingesetzten, an sich bekannten Verarbeitungsmaschinen, wie sie z. B. von H. Domininghaus in « Fortschrittliche Extrudertechnik », VDI-Taschenbuch 1970, und den Firmenschriften von Zimmer (Offenbach) und Maurer (Bern, Schweiz) und von G. Adank in « Deutsche Textiltechnik » 22 (1972), S. 417-422, beschrieben sind.

Die folgenden Beispiele dienen zur Erläuterung der Erfindung. Wenn nicht anders vermerkt, sind Mengenangaben also Gewichtsteile bzw. Gewichtsprozente zu verstehen.

Beispiel 1 (Vergleich)

Ein Polyurethan, das aufgebaut ist aus :

100 Teilen Polybutandioladipat (OH-Zahl : 94, Säurezahl : 0,7)
0,9 Teilen Dimethylolpolydimethylsiloxan (3 % OH-Gruppen)
10 Teilen Butandiol-(1,4)
40 Teilen 4,4'-Diisocyanatodiphenylmethan
0,7 Teilen n-Octanol,

das ferner 1 Gew.-% Kreide und 0,2 Gew.-% Montanesterwachs enthält, wird in einem Planetwalzenextruder aufgeschmolzen (Bedingungen s. Tabelle 1). Auch durch Variation von Drehzahl und Zylindertemperaturen kann keine homogene Schmelze erhalten werden. Die Schmelze wird einem Kalander zugeführt, auf dem sie zu einer Folie geformt wird (Bedingungen s. Tabelle 2). Auch mit Hilfe der Scherkräfte des Schmelzwalzenkalanders gelingt es unter den unterschiedlichsten Bedingungen nicht, eine homogene, gelteilchenfreie Folie herzustellen.

3

# 0 004 939

## Beispiel 2

Man verfährt wie im Vergleichsbeispiel 1 beschrieben, verwendet jedoch beim Aufbau des Polyurethans anstatt des Butandiols die gleiche Menge einer Mischung aus 12 Teilen Butandiol-(1,4) und 1 Teil Hexandiol-(1,6).

Das Produkt wird auf einem Planetwalzenextruder [Modell P 100 der Firma Eickhoff-Kleinewefers (vormals Schalker), Bochum] zu einer homogenen Schmelze (Bedingungen s. Tabelle 1) extrudiert, die bei der Weiterverarbeitung auf einem Schmelzkalander (Modell KM 950 der Firma Zimmer-Plastik, Offenbach, BRD, Bedingungen s. Tabelle 2) eine homogene, knötchenfreie Folie ergibt (Härte : 88 Shore A ; Dicke : 0,16 mm ; Zugfestigkeit : 68 MPa ; Reißdehnung : 1 100 %).

### Tabelle 1

Extrusionsbedingungen in einem Planetwalzenextruder bei Verarbeitung der TPU aus Beispiel 1 und Beispiel 2

|  | TPU aus Beispiel 2 | TPU aus Beispiel 1 |
|---|---|---|
| Einzugsschnecke (°C) | 170 ⎫ | |
| Planetenteil (°C) | 165 ⎬ | zwischen 160 und 200 variiert |
| Kopfzone (°C) | 170 ⎭ | |
| Austrittstemp. der Schmelze (°C) | 150 | 150—190 |
| U/min | 10 | 10—20 |
| Beurteilung der austretenden Schmelze | homogen | unter allen Bedingungen inhomogen |

### Tabelle 2

Kalanderbedingungen für die Weiterverarbeitung der im Planetwalzenextruder erhaltenen Polyurethan-schmelzen

|  | TPU aus Beispiel 2 | TPU aus Beispiel 1 |
|---|---|---|
| Verstellwalze (°C) | 180 ⎫ | variiert zwischen 150 und 200 |
| Festwalze (°C) | 180 ⎭ | |
| Abnahmegeschw. (m/min) | 5 | 5 |
| Beurteilung der abgezogenen Folie | homogen, glatt | stark gelkörper-haltig |

Der Vergleich der Verarbeitsbarkeit zwischen den thermoplastischen Polyurethanen aus Vergleichsbeispiel 1 und Beispiel 2 zeigt eindeutig die Überlegenheit der erfindungsgemäß zu verwendenden Produkte.

## Beispiel 3 (Vergleich)

Ein thermoplastisches Polyurethan, das aufgebaut ist aus

100 Teilen eines Polybutandiol-(1,4)-adipats (OH-Zahl : 49 ; Säurezahl : 0,35)
30 Teilen Butandiol-(1,4)
94,3 Teilen technischem 4,4'-Diphenylmethandiisocyant und
0,4 Teilen Äthylen-bisstearylamid

wird in einem Meßextruder (Extrusiometer der Firma Göttfert, BRD) extrudiert (Bedingungen s. Tabelle 2).

4

## Beispiel 4 (Vergleich)

Ein in an sich bekannter Weise gemäß DE-OS 1 940 181 hergestelltes Polyurethanelastomer aus 100 Teilen eines weitgehend linearen, bifunktionellen Polypropylenglykols vom mittleren Molekulargewicht 2 000 (OH-Zahl 56), 100 Teilen eines endständige Hydroxylgruppen aufweisenden Hexandiolpolycarbonats vom mittleren Molekulargewicht 2 000, 24 Teilen Butandiol-(1,4), 1 Teil Äthylen-bis-stearylamid und der dem in Tabelle 3 angeführten jeweiligen NCO/OH-Verhältnis entsprechenden Gewichtsmenge 4,4'-Diisocyanato-diphenylmethan wurde auf einem mit Folienblaskopf ausgerüsteten Extruder vom Typ S 45 der Firma Reifenhäuser (BRD) zu einem 0,3 mm starken Folienschlauch extrudiert. Extrusionsbedingungen und -ergebnisse sind in Tabelle 3 zusammengefaßt. Nur unter exakter Einhaltung der angegebenen Verarbeitungstemperaturen ließ sich in einem schmalen Dosierbereich (NCO/OH = 1.01 ; Versuch 4 c) ein einwandfreier Folienschlauch herstellen.

## Beispiel 5

Ein analog zu Beispiel 4 hergestelltes Polyurethanelastomer enthielt anstelle von 24 Teilen Butandiol-(1,4) ein Gemisch aus 21,6 Teilen Butandiol-(1,4) und 2,4 Teilen Hexandiol-(1,6).

Die Extrusion zu einem 0,3 mm starken Folienschlauch (vgl. Tabelle 3) führte in einem wesentlich verbreiterten Dosierbereich (NCO/OH = 1,01 bis 1,03 ; Versuche 5c-e) zu einwandfreier Qualität, wobei das Auffinden der geeigneten Verarbeitungstemperatur keine Schwierigkeiten bereitete und die im Vergleichsbeispiel 4 angegebenen Temperaturen um mindestens 5 °C über- oder unterschritten werden konnten, ohne daß das Extrusionsverhalten beeinträchtigt wurde.

Das physikalische Werteniveau wird, wie die Gegenüberstellung der Versuche 4a-e und 5a-e in Tabelle 4 zeigt, durch Verwendung des Diolgemisches anstelle der alleinigen Verwendung von Butandiol-(1,4) nicht merklich beeinflußt.

## Tabelle 3

### Extrusion eines TPU gemäß Vergleichsbeispiel 4 und Beispiel 5

| Beispiel | NCO/OH | Extrusionsbedingungen | | | Folienschlauch-qualität |
| --- | --- | --- | --- | --- | --- |
| | | Zylindertemperaturen (°C) | Kopf-Temperaturen (°C) | Extrusionsdruck kp/cm² | |
| 4a | 0.99 | 170—180—185—190 | 185—185—175 | 20 | viele Knötchen, geringe Standfestigkeit |
| 4b | 1.00 | 170—180—190—185 | 185—180—175 | 180 | vereinzelt Knötchen, geringe Standfestigkeit |
| 4c | 1.01 | 170—180—190—185 | 180—180—170 | 250 | einwandfrei |
| 4d | 1.02 | 170—180—190—185 | 180—180—170 | 280 | mittlere Knotenbildung |
| 4e | 1.03 | kein geeignetes Temperaturprofil einstellbar | | — | stark knotig |
| 5a | 0.99 | 165—175—185—185 | 180—175—165 | 240 | vereinzelt kleinste Knötchen |
| 5b | 1.00 | 165—175—185—185 | 180—175—165 | 350 | fast einwandfrei |
| 5c | 1.01 | 170—180—190—190 | 185—180—165 | 320 | einwandfrei |
| 5d | 1.02 | 170—180—190—190 | 185—180—170 | 320 | einwandfrei |
| 5e | 1.03 | 165—175—185—180 | 180—175—165 | 350 | einwandfrei |

Tabelle 4

Physikalische Eigenschaften der Versuchsbeispiele 4a-e (Vergleich) und 5a-e

| Beispiel | Moduli | | Zugfestigkeit (MPa) | Bruchdehnung (%) | Elastizität (%) | Härte (Shore A) |
|---|---|---|---|---|---|---|
| | 100% | 300% | | | | |
| 4a | 7,0 | 12,2 | 36,4 | 552 | 34 | 88 |
| 4b | 7,3 | 14,4 | 41,3 | 552 | 33 | 88 |
| 4c | 7,4 | 14,9 | 30,4 | 505 | 35 | 87 |
| 4d | 7,2 | 13,7 | 39,7 | 585 | 35 | 87 |
| 4e | 7,1 | 13,4 | 39,4 | 583 | 35 | 87 |
| 5a | 7,8 | 14,1 | 34,1 | 564 | 29 | 88 |
| 5b | 7,8 | 13,8 | 33,6 | 560 | 29 | 87 |
| 5c | 7,2 | 13,6 | 33,1 | 540 | 29 | 87 |
| 5d | 7,2 | 12,8 | 35,1 | 544 | 29 | 87 |
| 5e | 7,9 | 15,0 | 32,0 | 460 | 28 | 88 |

## Patentansprüche

1. Verwendung von thermoplastischen Polyurethanen auf Basis von Polyolen, Diisocyanaten und Kettenverlängerungsgemischen zur Verarbeitung in Extrudern und/oder Schmelz-Walzenkalandern, dadurch gekennzeichnet, daß die verwendeten Polyurethane aufgebaut sind aus

A) einem oder mehreren, im wesentlichen linearen, zwei, anteilsweise gegebenenfalls auch 3 Hydroxylgruppen aufweisenden Polyestern aus Glykolen und Adipinsäure, Phthal- und/oder Terephthalsäure, sowie deren Hydrierungsprodukten, Polycarbonaten und Polycaprolactonen, mit Molekulargewichten von 400-10 000

B) Diphenylmethandiisocyanat, sowie ggfs. bis zu 30 Gew.-% anderer Diisocyanate und

C) einer Mischung aus 85-99 Gew.-% Butandiol-(1,4) und 1-15 Gew.-% Hexandiol-(1,6), wobei das Äquivalentverhältnis von NCO-Gruppen der Komponente B) zu den zerewitinoffaktiven Wasserstoffatomen der Komponente (A + C) = 0,9 : 1 bis 1,2 : 1 ist und das molare Verhältnis der Komponenten A) zu C) 1 : 20 bis 5 : 1 beträgt.

2. Verwendung von thermoplastischen Polyurethanen nach Anspruch 1, dadurch gekennzeichnet, daß das Verhältnis von NCO- zu zerewitinoffaktiven Gruppen der Komponenten (A + C) 0,93 : 1 bis 1,04 : 1 beträgt.

3. Verwendung von thermoplastischen Polyurethanen nach Ansprüchen 1 und 2, dadurch gekennzeichnet, daß das Gewichtsverhältnis von Butandiol-1,4 zu Hexandiol-1.6 98 : 2 bis 90 : 10 beträgt.

4. Verwendung von thermoplastischen Polyurethanen nach Ansprüchen 1-3, dadurch gekennzeichnet, daß das Gewichtsverhältnis von Butandiol zu Hexandiol-1.6 95 : 5 bis 92 : 8 beträgt.

5. Verwendung von thermoplastischen Polyurethanen nach Ansprüchen 1-4, dadurch gekennzeichnet, daß Komponente A) im wesentlichen lineare Polyhydroxylverbindungen mit Durchschnittsmolekulargewichten von 450 bis 5 000 sind.

6. Verwendung von thermoplastischen Polyurethanen nach Ansprüchen 1-5, dadurch gekennzeichnet, daß das molare Verhältnis der Komponenten A) und C) 1 : 15 bis 1 : 1 beträgt.

## Claims

1. Use of thermoplastic polyurethanes based on polyols, diisocyanates and chain extender mixtures for processing in extruders and/or melt roll calenders, characterised in that the polyurethanes used are synthesised from

A) one or more substantially linear polyesters, containing two and optionally, in small quantities, even 3 hydroxyl groups, of glycols and adipic acid, phthalic and/or terephthalic acid, and their hydrogenation products, polycarbonates and polycaprolactones, with molecular weights of 400-10 000,

B) diphenylmethane diisocyanate, as well as, optionally, up to 30 % by weight of other diisocyanates and

C) a mixture of 85-99 % by weight of 1,4-butane diol and 1-15 % by weight of 1,6-hexane diol, the equivalent ratio of NCO groups in component B) to the Zerewitinoff-active hydrogen atoms in component (A + C) being 0.9 : 1 to 1.2 : 1 and the molar ratio of components A) to C) being 1 : 20 to 5 : 1.

2. Use of thermoplastic polyurethanes according to Claim 1, characterised in that the ratio of NCO groups to Zerewitinoff-active groups in components (A + C) is 0.93 : 1 to 1.04 : 1.

3. Use of thermoplastic polyurethanes according to Claims 1 and 2, characterised in that the ratio by weight of 1,4-butane diol to 1,6-hexane diol is 98 : 2 to 90 : 10.

4. Use of thermoplastic polyurethanes according to Claims 1-3, characterised in that the ratio by weight of butane diol to 1,6-hexane diol is 95 : 5 to 92 : 8.

5. Use of thermoplastic polyurethanes according to Claims 1-4, characterised in that component A) essentially comprises linear polyhydroxyl compounds having average molecular weights of 450 to 5 000.

6. Use of thermoplastic polyurethanes according to Claims 1-5, characterised in that the molar ratio of components A) and C) is 1 : 15 to 1 : 1.


**Revendications**

1. Utilisation de polyuréthanes thermoplastiques à base de polyols, de diisocyanates et de mélanges d'agents d'allongement de chaîne pour le façonnage dans des extrudeuses et/ou des calandres à cylindres pour masse fondue, caractérisée en ce que les polyuréthanes employés sont constitués par

A) un ou plusieurs polyesters essentiellement linéaires, présentant deux, le cas échéant en partie aussi 3 groupes hydroxyle, de glycols et d'acide adipique, d'acide phtalique et/ou téréphtalique ainsi que de leurs produits d'hydrogénation, polycarbonates et polycaprolactones, qui ont des poids moléculaires de 400 à 10 000,

B) du diphénylméthane-diisocyanate de même qu'éventuellement jusqu'à 30 % en poids d'autres diisocyanates et

C) un mélange à 85-99 % en poids de butane diol-(1,4) et à 1-15 % en poids d'hexane diol-(1,6), le rapport d'équivalence des groupes NCO du composant B) aux atomes d'hydrogène actifs selon Zerewitinoff du composant (A + C) étant de 0,9 : 1 à 1,2 : 1 et le rapport molaire entre les composants A) et C) étant de 1 : 20 à 5 : 1.

2. Utilisation de polyuréthanes thermoplastiques selon la revendication 1, caractérisée en ce que le rapport des groupes NCO envers les groupes actifs selon Zerewitinoff du composant (A + C) est de 0,93 : 1 à 1,04 : 1.

3. Utilisation de polyuréthanes thermoplastiques selon les revendications 1 et 2, caractérisée en ce que le rapport pondéral du butane diol-1,4 à l'hexane diol-1,6 est de 98 : 2 à 90 : 10.

4. Utilisation de polyuréthanes thermoplastiques selon les revendications 1 à 3, caractérisée en ce que le rapport pondéral du butane diol à l'hexane diol-1,6 est de 95 : 5 à 92 : 8.

5. Utilisation de polyuréthanes thermoplastiques selon les revendications 1 à 4, caractérisée en ce que les composants A) sont des composés polyhydroxylés essentiellement linéaires ayant des poids moléculaires moyens de 450 à 5 000.

6. Utilisation de polyuréthanes thermoplastiques selon les revendications 1 à 5, caractérisée en ce que le rapport molaire entre les composants A) et C) est de 1 : 15 à 1 : 1.